# EUROPÄISCHE PATENTSCHRIFT

(11) **EP 3 140 124 B1**
(45) Veröffentlichungstag und Bekanntmachung des Hinweises auf die Patenterteilung: **28.08.2019**
(21) Anmeldenummer: 15722098.9
(22) Anmeldetag: 27.04.2015
(51) Int. Cl.: B41J 3/407

(54) **HALTE- UND ZENTRIEREINRICHTUNG, BEHÄLTERBEHANDLUNGSVORRICHTUNG SOWIE VERFAHREN ZUR BEHANDLUNG VON BEHÄLTERN**
HOLD AND CENTERING DEVICE, CONTAINER TREATMENT DEVICE AND METHOD FOR TREATING CONTAINERS
DISPOSITIF DE RETENUE ET DE CENTRAGE, DISPOSITIF DE TRAITEMENT DE RÉCIPIENTS ET PROCÉDÉ DE TRAITEMENT DE RÉCIPIENTS

(30) Priorität: 09.05.2014 DE 102014106573
(43) Veröffentlichungstag der Anmeldung: 15.03.2017
(73) Patentinhaber: KHS GmbH, 44143 Dortmund (DE)
(72) Erfinder: SCHACH, Martin, 44799 Bochum (DE)
(86) Internationale Anmeldenummer: PCT/EP2015/059081
(87) Internationale Veröffentlichungsnummer: WO 2015/169631

(56) Entgegenhaltungen:
- WO-A1-2013/029710
- WO-A1-2013/029712
- DE-A1-102009 043 497
- DE-A1-102011 009 391

## Beschreibung

Die Erfindung bezieht sich auf eine Halte- und Zentriereinrichtung gemäß dem Oberbegriff Patentanspruch 1, sowie auf ein Verfahren zur Behandlung von Behältern gemäß dem Oberbegriff Patentanspruch 16.

Vorrichtungen zum Behandeln von Behältern sind in unterschiedlichen Ausführungen bekannt. Bekannt sind u. a. auch Vorrichtungen, bei denen die Behälter während des gesamten Transportes von einem Behältereinlauf, ggf. über mehrere Behandlungsmaschinen hinweg bis an einen Behälterauslauf an jeweils ein und derselben Halte- und Zentriereinrichtung (auch als Puck oder Transportpuck) bezeichnet) gehalten sind, und die Halte- und Zentriereinrichtung die Behälter erst am Behälterauslauf freigeben, von dem die Halte- und Zentriereinrichtung dann auf einer Puck-Rückführ-Transportstrecke an den Behältereinlauf zurückbewegt werden. Ferner sind Drucksysteme zum Bedrucken von Behältern unter Verwendung von digitalen, nach dem Tintenstrahl- oder Ink-Jet-Prinzip arbeitenden elektrischen Druckköpfen bekannt. Bekannt sind dabei insbesondere auch Drucksysteme oder Druckmaschinen, bei denen an einem um wenigstens eine vertikale Achse umlaufend angetriebenen Transportelement mehrere Behandlungs- oder Druckstationen zur Aufnahme jeweils eines zu bedruckenden Behälters gebildet sind, an denen die Behälter unter Verwendung von elektronisch ansteuerbaren nach dem Tintenstrahl- oder Ink-Jet-Prinzip arbeitenden digitalen Druckköpfen bedruckt werden.

Die Druckschrift DE 10 2009 043 497 A1 offenbart eine Vorrichtung zum Behandeln von Packmitteln, bei der mehrere Halte- und Zentriervorrichtungen Verwendung finden, an denen Behälter fixierbar sind. Die Halte- und Zentriervorrichtungen werden zusammen mit den daran fixierten Behältern zwischen einer Vielzahl von Transportelementen weitergeleitet. Diese Druckschrift offenbart somit eine Halte- und Zentriereinrichtung und ein Verfahren gemäß den Oberbegriffen der Ansprüche 1 und 16.

Die Druckschrift DE 10 2011 009 391 A1 offenbart eine Vorrichtung zum Bedrucken von Behältern, bei der eine Haltevorrichtung, die ein Paar von Behältern fixiert, teilweise synchron zu Druckköpfen bewegt wird, ohne eine mechanische Kopplung zwischen der Haltevorrichtung und einem Basismodul, das die Druckköpfe trägt, zu bewirken.

Ausgehend hiervon ist es Aufgabe der Erfindung, eine Behälterbehandlungsvorrichtung anzugeben, die eine höhere Maschinenleistung ermöglicht.

Die Aufgabe wird ausgehend vom Oberbegriff des unabhängigen Patentanspruchs 1 durch dessen kennzeichnende Merkmale gelöst. Eine Behälterbehandlungsvorrichtung ist Gegenstand des nebengeordneten Patentanspruchs 14 und ein Verfahren zur Behälterbehandlung ist Gegenstand des nebengeordneten Patentanspruchs 16.

Gemäß einem ersten Aspekt bezieht sich die Erfindung auf eine Halte- und Zentriereinrichtung für Behälter. Die Halte- und Zentriereinrichtung umfasst zumindest einen Fixierabschnitt und zwei Halteabschnitte. Mittels des Fixierabschnitts ist die Halte- und Zentriereinrichtung an einer an einem Transportelement einer Behälterbehandlungsmaschine vorgesehenen Behandlungsstation, insbesondere einem Drucksegment fixierbar. Beispielsweise ist der Fixierabschnitt in einem formkomplementär ausgebildeten Aufnahmeabschnitt an der Behandlungsstation einbringbar und in diesem Aufnahmeabschnitt lösbar befestigt. Die Halteabschnitte sind jeweils zum Aufnehmen und Halten eines zu behandelnden Behälters ausgebildet, beispielsweise durch Klemmen, Einspannen, durch Umgreifen oder durch Ansaugen mittels Vakuum eines Behälterabschnitts. Die Halte- und Zentriereinrichtung weist zwei einander gegenüberliegend angeordnete Halteabschnitte auf, mittels denen jeweils ein zu behandelnder Behälter fixierbar ist. Beispielsweise sind die Halteabschnitte zum Fixieren bzw. Halten der Behälter in deren Mündungsbereich ausgebildet.

Durch die erfindungsgemäße Ausbildung der Halte- und Zentriereinrichtung wird erreicht, dass gleichzeitig zwei Behälter durch eine einzige Halte- und Zentriereinheit an einer Behandlungsstation gehalten und gegenüber Mitteln zur Behandlung der Behälter, beispielsweise Druckköpfen lagegenau fixiert werden. Dadurch kann die Maschinenleistung wesentlich gesteigert werden, und zwar ohne wesentliche Vergrößerung der Grundfläche der Maschine, da an einer Behandlungsstation gleichzeitig zwei Behälter behandelt werden können.

Gemäß einem Ausführungsbeispiel ist der Fixierabschnitt zwischen den beiden gegenüberliegenden Halteabschnitten angeordnet. Dadurch wird die Halte- und Zentriereinrichtung mittig zwischen den Halteabschnitten an dem Transportelement bzw. der dort vorgesehenen Behandlungsstation gehalten. Dadurch ergibt sich eine symmetrische, insbesondere spiegelsymmetrische Anordnung der beiden Behälter an der Halte- und Zentriereinrichtung, was sich vorteilhaft auf die Gewichtsverteilung und die rotative Bewegbarkeit der Behälter an der jeweiligen Behandlungsstation auswirkt.

In einem weiteren Ausführungsbeispiel sind die Halteabschnitte zur Halterung eines Paares von zu behandelnden Behältern derart ausgebildet, dass die Behältermündungen der Behälter des Behälterpaares einander zugewandt sind. In anderen Worten sind die an der Halte- und Zentriereinrichtung gehaltenen Behälter ebenfalls spiegelsymmetrisch zu einer Mittelebene angeordnet, nämlich in Bezug auf die Behälterhochachsen lotrecht ausgerichtet. Insbesondere wird ein erster Behälter des Behälterpaares bei der Behälterbehandlung an der Behandlungsstation in Normalstellung, d.h. mit seinem Bodenbereich nach unten ausgerichtet gehalten, wohingegen ein weiterer Behälter in Überkopfstellung, d.h. mit seinem Mündungsbereich nach unten ausgerichtet gehalten wird. Dadurch wird eine platzsparende und durchsatzoptimierte Behälterbehandlung erreicht, da an einer Behandlungsstation zwei axial versetzte Behandlungseinrichtungen, z.B. Druckköpfe angebracht werden können, die zeitgleich eine Behälterbehandlung vollziehen können.

In einem weiteren Ausführungsbeispiel sind die Halteabschnitte greiferartig ausgebildet. Beispielsweise kann die Halterung der Behälter dadurch erfolgen, dass der Behälter mit seiner Behältermündung gegen ein Anlageelement oder Spannstück anliegt und durch ein Greifelement an einem radial vorstehenden Vorsprung zumindest teilweise umgriffen wird, um den Behälter eingespannt zwischen dem Spannstück und dem Greifelement zu halten. Der Vorsprung kann dabei insbesondere ein Neckring des Behälters sein und das Greifelement ein Neckringgreifer.

Alternativ sind die Halteabschnitte zumindest abschnittsweise in den Innenraum des Behälters im Mündungsbereich einschiebbar ausgebildet. Dadurch kann der Behälter durch bloßes Aufschieben auf den Halteabschnitt und ggf. innenumfangsseitiges Verspannen gehalten werden.

In einem weiteren Ausführungsbeispiel weisen die Halteabschnitte eine Klemmeinrichtung zur klemmenden Halterung des Behälters im Mündungsbereich auf. Die Klemmung kann dabei außenumfangsseitig durch äußeres Umgreifen des Mündungsbereichs und anschließendes Verklemmen durch außenumfangsseitiges Andrücken von Klemmmitteln an die Behälterwandung im Mündungsbereich erfolgen. Alternativ ist es möglich, dass bei einem in den Innenraum des Behälters im Mündungsbereich eingeschobenen Halteabschnitt ein Verklemmen durch eine Klemmeinrichtung mit von innen an die Behälterwandung angedrückten Klemmmitteln erfolgt. Dadurch können die zu behandelnden Behälter lagegenau durch die Halte- und Zentriereinrichtung fixiert und damit einer optimierten Behälterbehandlung unterzogen werden, da insbesondere bei der Bedruckung von Behältern die Halterung des Behälters gegenüber dem Druckkopf erhebliche Auswirkungen auf die Qualität des Druckbilds hat.

In einem weiteren Ausführungsbeispiel sind die Halteabschnitte derart ausgebildet, dass nach einem abschnittsweisen Einschieben des Halteabschnitts in den Mündungsbereich des Behälters eine Fixierung des Behälters durch radial nach außen bewegte, einen innenumfangsseitigen Druck auf die Behälterwandung bewirkende Klemmmittel bewirkt wird. Die Klemmmittel können beispielsweise durch eine Vielzahl von Kugeln gebildet sein, die beispielsweise mehrreihig an dem jeweiligen Halteabschnitt vorgesehen sind. Durch die radiale Beweglichkeit der Klemmmittel wird erreicht, dass bei radial zurückbewegten Klemmmitteln der Behälter auf den Halteabschnitt aufgeschoben werden kann und nach dem Aufschieben eine Verklemmung dadurch erfolgt, dass die Klemmmittel radial nach außen bewegt werden und damit die klemmende Halterung des Behälters gegenüber der Halte- und Zentriereinrichtung bewirkt wird.

Die Klemmeinrichtung kann federbelastet oder durch ein Fluid, insbesondere pneumatisch betrieben sein. Beispielsweise können die Klemmmittel durch Einwirkung eines oder mehrerer Federelemente in eine radial nach außen gerichtete Position vorgespannt sein und beim Aufschieben des Behälters auf den Halteabschnitt soweit radial nach innen zurückgedrückt werden, dass die Behältermündung auf den Halteabschnitt aufbringbar ist. Die Verklemmung erfolgt dann durch das federbelastete Andrücken der Klemmmittel an die Behälterwandung. Alternativ können die Klemmelemente durch Druckluft in eine radial außenliegende Position bewegbar sein. Beispielsweise können die Klemmmittel abschnittsweise in eine mit Druckluft beaufschlagbare Kammer hineinragen und bei Beaufschlagung dieser Kammer mit Druckluft radial nach außen bewegt werden, um eine Klemmung an der Behälterwandung zu bewirken. Die Fixierung einer ungefüllten Getränkedose erfolgt beispielsweise über einen formschlüssigen Dorn oder Zylinder. Mittels Vakuum wird sie über diesen angesaugt und somit positionsgenau gehalten.

Bevorzugt sind die Halteabschnitte drehbar gegenüber dem Fixierabschnitt gehalten. Dadurch wird erreicht, dass die an den Halteabschnitten fixierten Behälter gegenüber einer an dem Transportelement vorgesehenen Behandlungsstation, beispielsweise einer Druckstation gedreht und damit bei feststehendem Druckkopf umfangsseitig bedruckt werden können. Damit kann eine hochqualitative Bedruckung sichergestellt werden.

Vorzugsweise fallen die Drehachsen der Halteabschnitte in einer gemeinsamen Drehachse zusammen. Dadurch wird erreicht, dass die Behälterhochachsen der an den Halteabschnitten gehaltenen Behälter ebenfalls in einer gemeinsamen Achse zusammenfallen. Damit wird eine äußerst platzsparende Behandlung eines Behälterpaares in einer Behandlungsstation ermöglicht.

Gemäß einem Ausführungsbeispiel sind die beiden Halteabschnitte gemeinsam angetrieben, d.h. die Halteabschnitte sind antriebsmäßig miteinander gekoppelt und werden miteinander synchron um eine Drehachse gedreht. Dadurch können beide Halteabschnitte durch eine einzige Antriebseinheit rotativ bewegt werden. Alternativ sind die beiden Halteabschnitte unabhängig voneinander angetrieben. Dadurch kann vorteilhafterweise eine getrennte Ausrichtung des jeweiligen Behälters gegenüber einer Behandlungsstation erfolgen und der jeweilige Behälter auch unabhängig von dem weiteren Behälter des Behälterpaares gegenüber der Behandlungsstation gedreht werden.

Vorzugsweise sind die Halteabschnitte durch einen oder mehrere elektromagnetische Direktantriebe angetrieben, wobei ein mit dem jeweiligen Halteabschnitt gekoppelter Rotorabschnitt den Rotor des elektromagnetischen Direktantriebs bildet. Hierbei kann beiden Halteabschnitten ein einziger Rotorabschnitt zugeordnet sein bzw. diese beiden Halteabschnitte können mit dem einzigen Rotorabschnitt gekoppelt sein, so dass beide Halteabschnitte bei Drehung des Rotorabschnitts gedreht werden. Alternativ kann jedem Halteabschnitt ein eigenständiger Rotorabschnitt zugeordnet sein, wobei die Rotorabschnitte unabhängig voneinander rotativ bewegbar sind. Der Rotorabschnitt kann beispielsweise eine Vielzahl von umfangsseitig angeordneten Permanentmagneten aufweisen, die zusammen mit einer an der jeweiligen Behandlungsstation angeordneten Statorspule den elektromagnetischen Direktantrieb ausbilden. Dadurch wird eine platzsparende Möglichkeit des Antriebs der zu behandelnden Behälter erreicht.

Weiterhin können Mittel zur Beaufschlagung des Innenraums des zu behandelnden Behälters mit einem unter Druck stehenden Fluid vorgesehen sein. Insbesondere dünnwandige Behälter, beispielsweise PET-Flaschen, weisen eine sehr geringe Stabilität auf, so dass es bei der Behälterbehandlung zu geringfügigen Verformungen des Behälters kommt, die das Behandlungsergebnis negativ beeinflussen. Durch die Beaufschlagung des Innenraums des zu behandelnden Behälters mit einem unter Druck stehenden Fluid, d.h. mit einem Druck größer als der Atmosphärendruck, wird erreicht, dass der zu behandelnde Behälter eine größere Stabilität erhält. Damit kann das Behandlungsergebnis, insbesondere die Qualität des Behälteraufdrucks, wesentlich verbessert werden.

Gemäß einem weiteren Aspekt bezieht sich die Erfindung auf eine Vorrichtung zum Behandeln von Behältern mit einer Behältertransportstrecke nach Anspruch 14, auf der die Behälter zum Behandeln in einer Transportrichtung von einem Behältereinlauf an einen Behälterauslauf bewegt werden, wobei die Behältertransportstrecke von wenigstens einem um eine vertikale Maschinenachse umlaufend antreibbaren Transport- und Behandlungselement mit mehreren am Transportelement ausgebildeten Behandlungsstationen gebildet ist. Vorzugsweise kann die Vorrichtung modular aufgebaut sein und aus mehreren aufeinanderfolgenden und aneinander anschließenden Transport- und Behandlungselementen bestehen. Die Vorrichtung nutzt Halte- und Zentriereinheiten zum Halten, Zentrieren, Ausrichten und/oder Bewegen der Behälter an den Behandlungsstationen während der Behandlung. Die Halte- und Zentriereinheiten sind dabei wie ein Transportpuck lösbar an den Behandlungsstationen gehalten, so dass eine Weitergabe der jeweiligen Halte- und Zentriereinheit zusammen mit den daran vorgesehenen Behältern von einem Transport- und Behandlungselement zum nächsten Transport- und Behandlungselement ermöglicht wird. D.h., ein Behälter wird zu Beginn der Behälterbehandlung an einer Halte- und Zentriereinrichtung angeordnet und durchläuft dann zusammen mit dieser Halte- und Zentriereinrichtung mehrere Transport- und Behandlungselemente. Die Halte- und Zentriereinrichtungen weisen jeweils zwei einander gegenüberliegend angeordnete Halteabschnitte auf, wobei jeder Halteabschnitt zum Halten jeweils eines zu behandelnden Behälters ausgebildet ist.

Durch die erfindungsgemäße Ausbildung der Behälterbehandlungsvorrichtung wird erreicht, dass gleichzeitig zwei Behälter durch die Halte- und Zentriereinheit an einer Behandlungsstation gehalten und behandelt werden. Dadurch kann die Maschinenleistung wesentlich gesteigert werden, und zwar ohne wesentliche Vergrößerung der Grundfläche der Maschine.

In einem bevorzugten Ausführungsbeispiel ist eine Zuführeinrichtung für die zu behandelnden Behälter vorgesehen, die eine Schwenkeinrichtung zum Schwenken eines Teils der Behälter um eine senkrecht zu deren Behälterhochachse verlaufende Achse aufweist, wobei die Zuführeinrichtung derart ausgebildet ist, dass jeweils Behälterpaare mit einander zugewandten Mündungsbereichen den Halte- und Zentriereinrichtungen zugeführt werden.

Dies kann bspw. derart erfolgen, dass die Behälter in mindestens zwei Reihen der Behandlungsvorrichtung über zwei Transportsterne zugeführt werden, wobei ein Transportstern eine Wendefunktion aufweist für die Behälter der ersten Reihe, und der andere Transportstern die Behälter der zweiten Reihe überleitet, allerdings ohne ein Wenden der Behälter. Bei einer alternativen Ausführung wird das Halte- und Zentrierelement bei der parallelen Bewegung in Transportrichtung in den einen Behälter eingeführt (abgesenkt) und der andere, gewendete Behälter wird über einen separaten Transportstern mit Wendefunktion herangeführt. Die Übernahme des gewendeten Behälters erfolgt dann bspw. bei der Aufwärtsbewegung des Halte- und Zentrierelementes. Am Auslauf der Behandlungsvorrichtung ist eine analoge Entlassung der Behälter vorgesehen.

Dadurch werden an einer Rotationsachse aber spiegelsymmetrisch angeordnete Behälter, d.h. beispielsweise ein Behälter in einer Überkopfstellung, bei dem der Mündungsbereich nach unten weist, und ein Behälter in einer Normalstellung, bei dem der Behälterboden untenliegend angeordnet ist, zusammen an einer Halte- und Zentriereinrichtung gehalten. Dadurch können beide Behälter des Behälterpaares am Mündungsbereich gehalten werden. Dies ist vorteilhaft, da dadurch eine exakte Halterung der Behälter in einem Bereich gewährleistet ist, in dem keine Bedruckung zu erfolgen hat.

Gemäß einem letzten Aspekt betrifft die Erfindung ein Verfahren zum Behandeln von Behältern nach Anspruch 16, bei dem die zu behandelnden Behälter auf einer Behältertransportstrecke von einem Behältereinlauf an einen Behälterauslauf bewegt werden, wobei die Behältertransportstrecke von wenigstens einem um eine vertikale Maschinenachse umlaufend antreibbaren Transport- und Behandlungselement mit mehreren Behandlungsstationen gebildet ist, mit Halte- und Zentriereinheiten zum Halten, Zentrieren, Ausrichten und/oder Bewegen der Packmittel an den Behandlungsstationen während der Behandlung. Die Halte- und Zentriereinrichtungen weisen jeweils zwei einander gegenüberliegend angeordnete Halteabschnitte auf, an denen jeweils zwei zu behandelnde Behälter einander gegenüberliegend gehalten werden.

Unter Behälter im Sinne der Erfindung werden sämtliche Behälter verstanden, insbesondere Flaschen, Dosen etc.

Behälterbehandlungsmaschine im Sinne der Erfindung sind jegliche Maschinen, mit denen eine Behälterbehandlung vollzogen werden kann, insbesondere Maschinen zur Bedruckung von Behältern, Etikettiermaschinen etc.

Unter Behälterbehandlung wird insbesondere eine Behandlung zur Ausstattung von Behältern mit Ausstattungsmerkmalen verstanden, beispielsweise eine Bedruckung oder eine Etikettierung.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen. Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:
- Fig. 1: beispielhaft eine Halte- und Zentriereinrichtung mit zwei daran angeordneten Behältern gemäß einem ersten Ausführungsbeispiel in einer schematischen Seitendarstellung;
- Fig. 2: beispielhaft eine Halte- und Zentriereinrichtung mit zwei daran angeordneten Behältern gemäß einem zweiten Ausführungsbeispiel in einer schematischen Seitendarstellung;
- Fig. 3: beispielhaft die Halte- und Zentriereinrichtung gemäß Fig. 2 in einer detaillierteren Darstellung;
- Fig. 4: beispielhaft eine Behälterbehandlungsvorrichtung in einer schematischen Darstellung; und
- Fig. 5: beispielhaft ein Drucksegment mit einer daran angeordneten Halte- und Zentriereinrichtung in einer schematischen Schnittdarstellung.

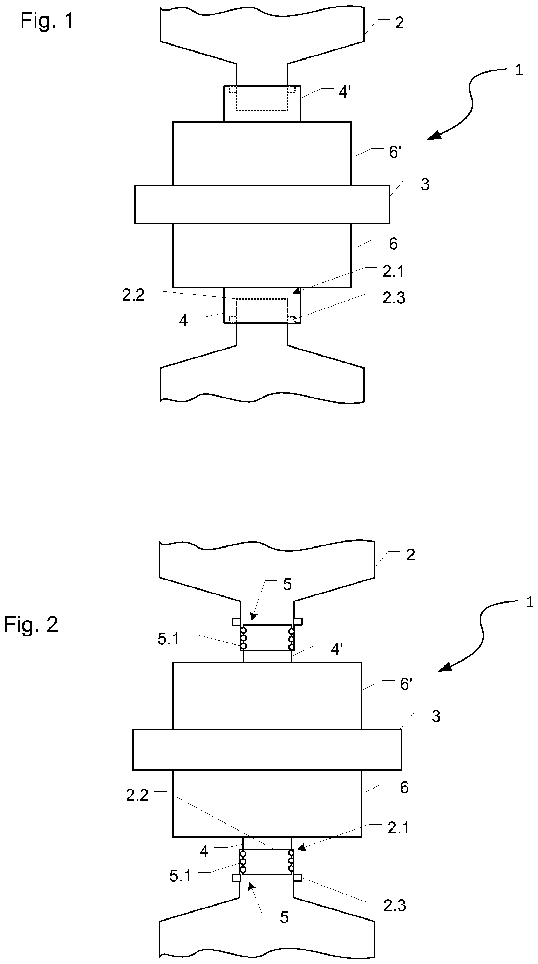

In Figur 1 ist mit dem Bezugszeichen 1 eine Halte- und Zentriereinrichtung in einem ersten Ausführungsbeispiel gezeigt. Die Halte- und Zentriereinrichtung 1 dient der Aufnahme und Fixierung von Behältern 2 während einer Behälterbehandlung. Eine Behälterbehandlung kann insbesondere eine Bedruckung von Behältern 2 in einem Direktdruckverfahren sein, bei dem Behälter 2 mittels einem nach dem Tintenstrahldruckprinzip arbeitenden Druckkopf mit einem Aufdruck versehen werden.

Die Halte- und Zentriereinrichtung 1 weist einen Fixierabschnitt 3 auf, mittels dem die Halte- und Zentriereinrichtung 1 gegenüber einem Transportelement einer Behälterbehandlungsmaschine bzw. einer an einem Transportelement einer Behälterbehandlungsmaschine vorgesehenen Behandlungsstation, beispielsweise einem die Bedruckung vollziehenden Drucksegment fixierbar ist. Beispielsweise kann der Fixierabschnitt 3 im Querschnitt kreisförmig ausgebildet sein und radial gegenüber den übrigen Abschnitten, insbesondere gegenüber den oberhalb bzw. unterhalb des Fixierabschnitts 3 vorgesehenen Abschnitten der Halte- und Zentriereinrichtung 1, vorstehen, so dass beim Eingreifen des Fixierabschnitts 3 in einen komplementär ausgebildeten, an der Behandlungsstation vorgesehenen Aufnahmeabschnitt eine lagegenaue Fixierung der Halte-und Zentriereinrichtung 1 gegenüber dieser Behandlungsstation bzw. den daran vorgesehenen Mitteln zur Behandlung der Behälter 2, beispielsweise einem oder mehreren Druckköpfen, erfolgt. Insbesondere kann die Halte- und Zentriereinrichtung 1 zur Halterung derselben an dem Transportelement bzw. der Behandlungsstation mittels elektromagnetischer Kräfte ausgebildet sein.

Die Halte-und Zentriereinrichtung 1 weist des Weiteren zwei Halteabschnitte 4, 4' auf, mittels denen die Halterung bzw. Fixierung der zu behandelnden Behälter 2 gegenüber der Halte- und Zentriereinrichtung 1 erfolgt. Beispielsweise sind die Halteabschnitte 4, 4' an gegenüberliegenden freien Enden der Halte- und Zentriereinrichtung 1 vorgesehen. Vorzugsweise sind die Halteabschnitte 4, 4' zur Halterung der Behälter 2 im Bereich deren Behältermündung 2.1 ausgebildet. Insbesondere ist die Halte- und Zentriereinrichtung 1 zur Halterung eines Paares von Behältern 2 derart ausgebildet, dass die Behälter 2 mit deren jeweiliger Behälterhochachse achsgleich an der Halte- und Zentriereinrichtung 1 gehalten sind. Beispielsweise kann ein erster Behälter 2 an einem ersten Halteabschnitt 4 hängend nach unten gehalten und ein zweiter Behälter 2 des Behälterpaares dem ersten Behälter 2 gegenüberliegend durch den weiteren Halteabschnitt 4' kopfüber, d.h. der Behältermündung 2.2 nach unten ausgerichtet gehalten sein. In anderen Worten erfolgt die Halterung der Behälter 2 des Behälterpaares derart, dass die Behältermündungen 2.2 in Bezug auf den Fixierabschnitt 3 einander gegenüberliegend vorgesehen sind.

Des Weiteren weist die Halte-und Zentriereinrichtung 1 zumindest eine, im gezeigten Ausführungsbeispiel zwei Rotorabschnitte 6, 6' auf, mittels denen ein rotativer Antrieb der durch die Halteabschnitte 4, 4' gehaltenen, zu behandelnden Behälter 2 erfolgen kann. Insbesondere können die Rotorabschnitte 6, 6' und die Halteabschnitte 4, 4' fest miteinander verbundene Abschnitte sein, die drehbar gelagert gegenüber dem Fixierabschnitt 3 gehalten sind. Alternativ hierzu können jeweils der einander zugeordnete Halteabschnitt 4 und der Rotorabschnitt 6 bzw. der Halteabschnitt 4' und der Rotorabschnitt 6' unabhängig voneinander gegenüber dem Fixierabschnitt 3 drehbar gelagert sein. Somit können entweder das an der Halte-und Zentriereinrichtung 1 gehaltene Behälterpaar gemeinsam gegenüber dem Fixierabschnitt 3 mittels auf den Rotorabschnitt 6, 6' einwirkenden Kräfte gedreht werden, oder die jeweiligen Behälter 2 können unabhängig voneinander durch auf die jeweiligen Rotorabschnitte 6, 6' einwirkenden Kräfte gegenüber dem Fixierabschnitt 3 gedreht werden.

Insbesondere kann der Fixierabschnitt 3 bei Einbringung der Halte- und Zentriereinrichtung 1 in eine Vorrichtung zur Behandlung von Behältern ein feststehendes Primärteil bilden. Die Halteabschnitte 4, 4' und die Rotorabschnitte 6, 6' können Bestandteil eines Sekundärteils sein, das drehbar gelagert gegenüber dem Primärteil angeordnet ist. Alternativ können der Halteabschnitt 4 und der Rotorabschnitt 6 ein erstes Sekundärteil und der Halteabschnitt 4' und der Rotorabschnitt 6' ein zweites Sekundärteil bilden, wobei das erste und das zweite Sekundärteil unabhängig voneinander gegenüber dem Fixierabschnitt 3, d.h. dem Primärteil drehbar sind.

Die Rotorabschnitte 6, 6' dienen vorzugsweise der Einleitung von Drehkräften, um während der Behälterbehandlung eine Drehung der Behälter 2 um deren Behälterhochachse zu bewirken. Insbesondere können damit die Behälter 2 durch Drehen umfangsseitig flächig bedruckt werden. Die Rotorabschnitte 6, 6' können dabei jeweils den Rotor eines elektromagnetischen Direktantriebs bilden und mehrere umfangsseitig angeordnete Permanentmagneten aufweisen, die zusammen mit einer am Transportelement vorgesehenen Statorwicklung einen elektromagnetischen Direktantrieb für die Drehung der Behälter 2 bildet. Durch die Rotorabschnitte 6, 6' können damit die Halteabschnitte 4, 4' gemeinsam oder unabhängig voneinander rotativ angetrieben werden.

Die Halterung der Behälter 2 an der Halte-und Zentriereinrichtung 1 kann auf unterschiedliche Art und Weise erfolgen. In dem Ausführungsbeispiel gemäß Figur 1 erfolgt die Halterung der Behälter beispielsweise dadurch, dass eine Einspannwirkung zwischen der Behältermündung 2.2 und einem im Mündungsbereich 2.1 vorgesehenen Vorsprung 2.3 erzeugt wird. Der Vorsprung 2.3 kann insbesondere ein Neckring des Behälters 2 sein. Beispielsweise wird gegenüber der Behältermündung 2.2 ein Spannstück zur Anlage gebracht, das gegenüber einem den Vorsprung 2.3 hintergreifenden Greifabschnitt eine Spannwirkung erzeugt.

Figur 2 zeigt ein weiteres Ausführungsbeispiel einer erfindungsgemäßen Halte- und Zentriereinrichtung 1, bei dem die Halterung der Behälter 2 mittels eines zumindest teilweise in den Innenraum des Behälters 2 im Mündungsbereich 2.1 einschiebbaren Halteabschnitts 4, 4' erfolgt. Der Halteabschnitt 4, 4' weist eine Klemmeinrichtung 5 auf mittels der eine klemmende Halterung des Behälters 2 im Behältermündungsbereich 2.1 erfolgt. Die Klemmeinrichtung 5 weist beispielsweise mehrere umfangsseitig am Halteabschnitt 4, 4' verteilte Klemmmittel 5.1 auf, die beispielsweise durch radial verschiebliche Kugeln gebildet sind. Insbesondere können mehrere Reihen von Klemmmitteln 5.1 vorgesehen sein, die in Richtung der Behälterhochachse übereinander angeordnet sind. Durch die radiale Verschiebbarkeit der Klemmmittel 5.1 wird erreicht, dass nach dem Einschieben des Halteabschnitts 4, 4' in den Mündungsbereich 2.1 die Klemmmittel 5.1 gegen die Innenfläche der Behälterwandung im Mündungsbereich 2.1 drücken und damit eine Fixierung des Behälters 2 gegenüber dem Halteabschnitt 4, 4' erfolgt.

Die Klemmmittel 5.1 können beispielsweise durch Federmittel in eine radial äußere Stellung vorgespannt sein und beim Einführen des Halteabschnitts 4, 4' in den Mündungsbereich 2.1 zumindest teilweise nach innen zurückgeschoben werden, so dass durch die Rückstellungskräfte der Klemmmittel 5.1 eine Klemmwirkung erreicht wird.

Alternativ ist es möglich, dass die Klemmmittel 5.1 von einer zumindest teilweise zurückgezogenen Stellung in eine vorgeschobene Stellung antreibbar sind. Der Antrieb kann beispielsweise durch ein unter Druck stehendes Fluid, insbesondere pneumatisch erfolgen.

In der Figur 1 oder 2 nicht dargestellt sind die inneren Kanäle in den Fixier- und Rotorabschnitten, um die Behälter 2 mit einem erhöhten Innendruck zu beaufschlagen.

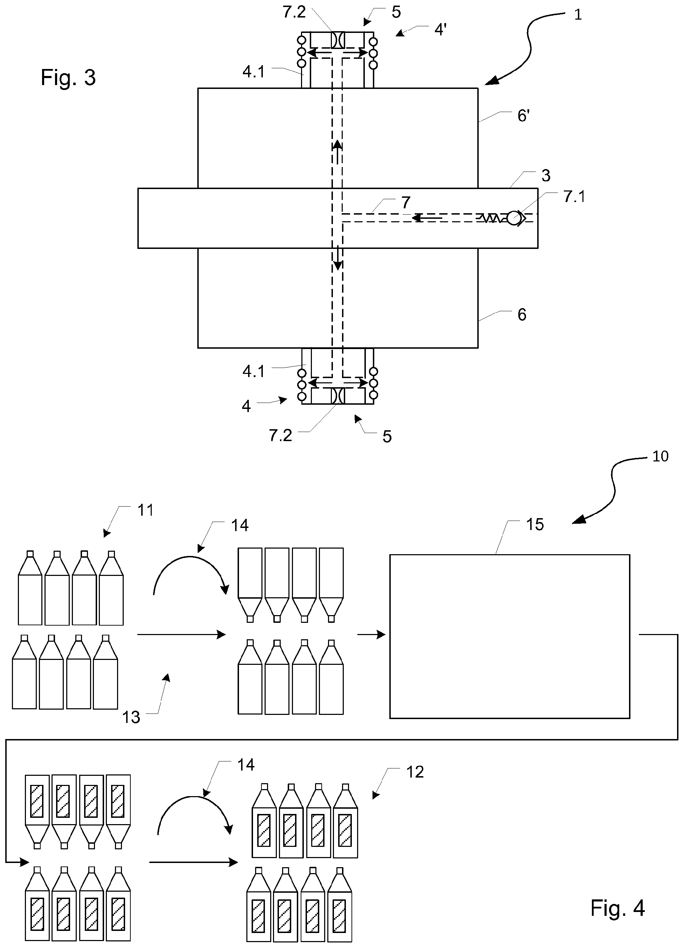

Fig. 3 zeigt eine Halte- und Zentriereinrichtung 1 in einer Schnittdarstellung, bei der die Klemmeinrichtung 5 mittels Druckluft oder Vakuum betätigt wird. Insbesondere ist in der Halte- und Zentriereinrichtung 1 ein Kanalsystem 7 zur Zuführung der Druck- oder Saugluft von dem Fixierabschnitt 3 zu den Halteabschnitten 4, 4' vorgesehen. In dem Kanalsystem 7 ist ein Rückschlagventil 7.1 vorgesehen. Die Druckluftzuführung oder Vakuumerzeugung in die Halte- und Zentriereinrichtung 1 erfolgt beispielsweise über die Ankopplung des Fixierabschnitts 3 an das Transportelement bzw. eine dort vorgesehene Behälterbehandlungseinrichtung. Ferner ist in den Halteabschnitten 4, 4' jeweils zumindest eine Kammer 4.1 vorgesehen, die mit dem Kanalsystem 7 gekoppelt ist. Zum Antrieb der Klemmmittel 5.1 sind diese derart mit der Kammer 4.1 gekoppelt, dass durch eine Druckbeaufschlagung der Kammer 4.1 die Klemmmittel, die beispielsweise durch umfangsseitig verteilt angeordnete kugelförmige Klemmelemente gebildet werden, radial nach außen bewegt werden, so dass sich nach Einführung des jeweiligen Halteabschnitts 4, 4' in den Mündungsbereich 2.1 des Behälters 2 eine klemmende Halterung des Behälters 2 ergibt.

Wie vorstehend bereits beschrieben, ist dabei idealerweise auch eine Kanalverbindung zum Behälterinnenraum hin vorgesehen, um den Behälter 2 mit einem erhöhten Innendruck zu beaufschlagen. Um einen erhöhten Klemmdruckim Bereich der Halteabschnitte 4 auf die Behältermündung zu erreichen und das Absprengen des Behälters 2 zur vermeiden, sind vorteilhafterweise je eine Gasdrossel 7.2 nach der Kammer 4.1 oder dem dorthin führenden Kanalabschnitt des Kanalsystems 7 und vor der Auslassöffnung zum jeweiligen Behälterinnenraum vorgesehen.

Der Über- oder Unterdruck wird beim weiterleiten der Transporteinrichtung und somit beim Verlassen der Kupplungsstation mittels eines Rückschlagventils während des gesamten Prozesses bis zum späteren Lösen von der Transporteinrichtung gehalten.

Fig. 4 zeigt in einer schematischen Darstellung eine Behälterbehandlungsvorrichtung 10. Die Behälterbehandlungsvorrichtung 10 weist einen Behältereinlauf 11 auf, an dem Behälter 2 beispielsweise in stehender Ausrichtung zugeführt werden. Mittels einer Zuführeinrichtung 13 kann die Behälterzuführung insbesondere in zwei Reihen erfolgen, wobei die Behälter 2 der ersten Reihe in stehender Ausrichtung verbleiben und in dieser Ausrichtung der zumindest einen Behälterbehandlungseinheit 15 zugeführt werden. Die Behälter 2 der weiteren Reihe werden einer Schwenkeinrichtung 14 zugeleitet, mittels der die Behälter von einer stehenden Ausrichtung, bei der die Behälter 2 mit dem Behälterboden nach unten ausgerichtet sind bzw. auf diesem aufstehen in eine Überkopfposition geschwenkt werden, d.h. die Behältermündung nach unten weist. Das Schwenken der Flasche kann dabei insbesondere um eine senkrecht zur Behälterhochachse verlaufende Schwenkachse erfolgen. Zum Verschwenken der Behälter 2 können dabei diese beispielsweise im Bereich der Behältermündung 2.2 ergriffen werden. Das Verschwenken kann insbesondere mittels eines geeignete Schwenkmittel aufweisenden Transportsterns erfolgen, d.h. das Verschwenken des Behälters 2 erfolgt während des Behältertransports auf der Transportstrecke.

Anschließend wird jeweils ein Behälterpaar bestehend aus zwei Behältern, die mit den Mündungsbereichen einander zugewandt sind, auf eine Halte- und Zentriereinrichtung 1 aufgebracht und durch diese Halte- und Zentriereinrichtung 1 im Mündungsbereich 2.1 gehalten. Anschließend durchläuft das an der jeweiligen Halte- und Zentriereinrichtung 1 gehaltene Behälterpaar die Behälterbehandlungseinheit 15, und zwar derart, dass die Behälter 2 in der gesamten Behälterbehandlungseinheit 15 durch ein und dieselbe Halte- und Zentriereinrichtung 1 gehalten werden.

Die Behälterbehandlungseinheit 15 kann insbesondere eine Vorrichtung zum Bedrucken der Behälter 2 im Direktdruckverfahren sein. Die Behälterbehandlungseinheit 15 kann beispielsweise modulartig aufgebaut sein, d.h. die Behälterbehandlungseinheit 15 besteht aus mehreren in Transportrichtung unmittelbar aneinander anschließenden Modulen, wobei beispielsweise sämtliche Module jeweils von einer identischen Grundeinheit gebildet sind, die mit den für die spezielle Aufgabe des jeweiligen Moduls notwendigen Funktionselementen, beispielsweise Drucksegmenten zum Bedrucken der Behälter 2, Härteeinrichtungen etc. ausgestattet ist. Die einzelnen Module sind beispielsweise unmittelbar bzw. transportmäßig an einander anschließend angeordnet und gegenläufig, aber synchron derart angetrieben, dass diese Module in ihrer Gesamtheit eine Transporteinrichtung bilden, mit der die Behälter 2 innerhalb der Behälterbehandlungseinheit 15 auf einem mehrfach umgelenkten Behälter-Transportweg bewegt werden und auf diesem Transportweg die Behälterbehandlung erfolgt. Die Behälter werden jedoch auf dem gesamten Transportweg durch die Behälterbehandlungseinheit 15 von ein und derselben Halte- und Zentriereinrichtung 1 gehalten.

Am Ende der Behälterbehandlungsvorrichtung 10 kann nach dem Lösen der Behälter von der Halte- und Zentriervorrichtung 1 eine weitere Schwenkvorrichtung 14 vorgesehen sein, mittels der ein Rückschwenken der in Überkopfstellung befindlichen Behälter 2 erfolgt, so dass nach diesem Rückschwenken sämtliche Behälter 2 in Normalstellung, d.h. mit dem Behälterboden nach unten ausgerichtet abtransportiert werden.

Wie bereits zuvor dargelegt, kann die Behälterbehandlung insbesondere eine Bedruckung der Behälter 2 im Direktdruckverfahren mit nach dem Tintenstrahlprinzip arbeitenden Druckköpfen sein. Die die Bedruckung durchführende Behälterbehandlungseinheit 15 kann beispielsweise eine oder mehrere Transportelemente aufweisen, an denen umfangsseitig mehrere für die Behälterbedruckung ausgebildete Drucksegments vorgesehen sind.

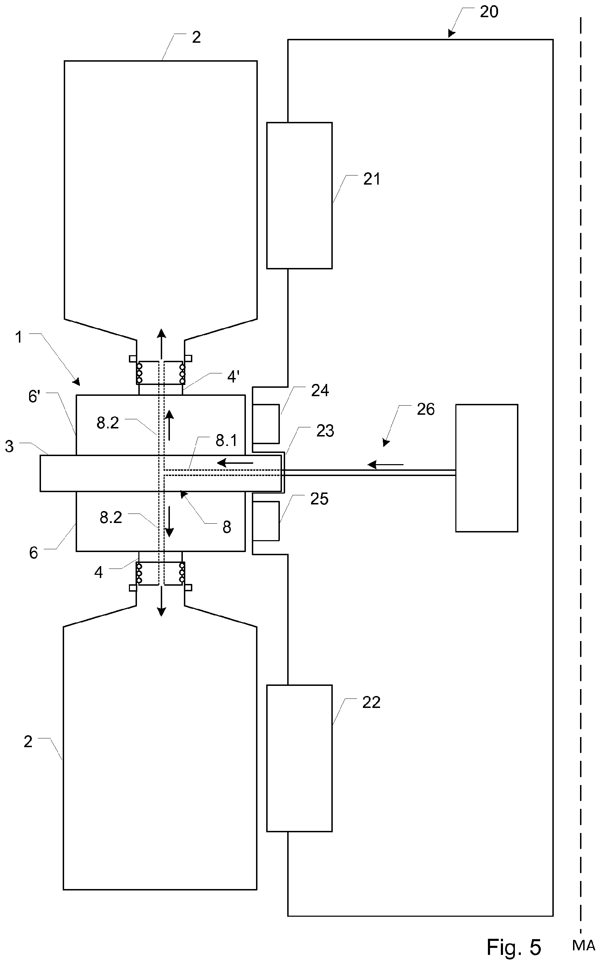

Fig. 5 zeigt beispielhaft in schematischer Darstellung ein Drucksegment 20 mit darin eingebrachter Halte- und Zentriereinrichtung 1, an der ein Behälterpaar gehalten ist. Die Halte- und Zentriereinrichtung 1 kann gemäß einem der zuvor beschriebenen Ausführungsbeispiele ausgebildet sein, so dass bezüglich der Ausbildung der Halte-und Zentriereinrichtung 1 auf die vorherigen Ausführungen verwiesen sei.

Das Drucksegment 20 weist zumindest einen ersten und einen zweiten Druckkopf 21, 22 auf, wobei jeder Druckkopf 21, 22 jeweils einem Behälter 2 des Behälterpaares zugeordnet ist. Insbesondere kann der erste Druckkopf 21 im oberen Bereich des Drucksegments 20 und der zweite Druckkopf 22 im unteren Bereich des Drucksegments 20 vorgesehen sein. Alternativ können auch mehrere Gruppen von Druckköpfen vorgesehen sein, wobei jede Gruppe von Druckköpfen jeweils einem Behälter 2 des Behälterpaares zugeordnet ist. Die Druckköpfe 21, 22 können unabhängig voneinander parallel zu einer Maschinenhochachse verfahrbar ausgebildet sein, um den Behälter 2 im gesamten Wandungsbereich an der gewünschten Position bedrucken zu können.

Zur Halterung der Halte- und Zentriereinrichtung 1 weist das Drucksegment 20 einen Aufnahmeabschnitt 23 auf, der an den Fixierabschnitt 3 zumindest abschnittsweise derart formangepasst ist, dass nach Einbringung der Halte- und Zentriereinrichtung 1 in das Drucksegment 20 eine lagegenaue Fixierung der Halte- und Zentriereinrichtung 1 am Drucksegment 20 erreicht wird. Beispielsweise können im Bereich des Aufnahmeabschnitts 23 ein oder mehrere Elektromagneten am Drucksegment 20 vorgesehen sein. Durch geeignete Ansteuerung der Elektromagnete kann die Halte- und Zentriereinrichtung 1 am Drucksegment 20 gehalten und wieder freigegeben werden.

Das Drucksegment weist vorzugsweise eine oder mehrere Statorspulen 24, 25 auf, die mit den Rotorabschnitten 6, 6' der Halte- und Zentriereinrichtung 1 einen oder mehrere elektromagnetische Direktantriebe bilden und mittels denen eine Drehung der Behälter 2 um deren Behälterhochachse bewirkt wird. Dadurch können die Behälter 2 umfangsseitig durch Drehung gegenüber den Druckköpfen 21, 22 bedruckt werden. Für den Fall, dass beide Behälter 2 des Behälterpaares nicht unabhängig voneinander gedreht werden müssen (beispielsweise bei identischer Ausrichtung der Drehlage um die jeweilige Behälterhochachse der zugeführten Behälter), kann auch lediglich nur eine Statorspule vorgesehen sein, mittels der beide Behälter 2 gleichzeitig bewegt werden.

Des Weiteren weist das Drucksegment eine Zuführeinrichtung 26 für ein unter Druck stehendes Fluid auf, um die Innenräume der Behälter 2 mit einem Überdruck zu beaufschlagen. Dadurch wird die Stabilität der zu bedruckenden Behälter 2 wesentlich verbessert. Das unter Druck stehende Fluid ist insbesondere Druckluft. Die Zuführeinrichtung 26 kann durch einen Druckerzeuger im Drucksegment 20 gebildet werden oder lediglich eine Fluidverbindung im Drucksegment sein, die ein in der Halte- und Zentriereinrichtung 1 vorgesehenes Kanalsystem 8 mit einer zentralen Einrichtung verbindet, mittels der das unter Druck stehende Fluid bereitgestellt wird. Das Kanalsystem 8 in der Halte- und Zentriereinrichtung 1 kann insbesondere einen ersten Kanalabschnitt 8.1 aufweisen, der in dem Fixierabschnitt 3 verläuft. Dieser erste Kanalabschnitt 8.1 kann mit der Zuführeinrichtung 26 des Drucksegments verbunden sein. Des Weiteren weist das Kanalsystem 8 zweite Kanalabschnitte 8.2 auf, die den ersten Kanalabschnitt 8.1 mit dem jeweiligen Behälterinnenraum verbinden, d.h. die zweiten Kanalabschnitte 8.2 münden jeweils in den Behälterinnenraum.

Das Fluid zur Erzeugung eines Überdrucks in dem Behälter kann bei einer verbesserten Lösung auch ein steriles oder ein sterilisierendes gas- und/oder dampfförmiges Medium sein.

Die Erfindung wurde voranstehend an Ausführungsbeispielen beschrieben. Es versteht sich, dass eine Vielzahl von Änderungen oder Abwandlungen möglich sind.

### Bezugszeichenliste

- 1: Halte- und Zentriereinrichtung
- 2: Behälter
- 2.1: Mündungsbereich
- 2.2: Behältermündung
- 2.3: Vorsprung
- 3: Fixierabschnitt
- 4, 4': Halteabschnitt
- 4.1: Kammer
- 5: Klemmeinrichtung
- 5.1: Klemmmittel
- 6, 6': Rotorabschnitt
- 7: Kanalsystem
- 8: Kanalsystem
- 8.1: erster Kanalabschnitt
- 8.2: zweiter Kanalabschnitt

- 10: Behälterbehandlungsvorrichtung
- 11: Behältereinlauf
- 12: Behälterauslauf
- 13: Zuführeinrichtung
- 14: Schwenkeinrichtung
- 15: Behälterbehandlungseinheit

- 20: Drucksegment
- 21: erster Druckkopf
- 22: zweiter Druckkopf
- 23: Aufnahmeabschnitt
- 24, 25: Statorspule
- 26: Zuführeinrichtung

- MA: Maschinenachse

## Patentansprüche

1. Halte- und Zentriereinrichtung für Behälter umfassend einen Fixierabschnitt (3), mittels dem die Halte- und Zentriereinrichtung an einer an einem Transportelement einer Behälterbehandlungsmaschine vorgesehenen Behandlungsstation fixierbar ist und zumindest einem Halteabschnitt (4, 4'), der zum Aufnehmen und Halten eines zu behandelnden Behälters (2) ausgebildet ist, wobei die Halte- und Zentriereinrichtung (1) mittels des Fixierabschnittes (3) lösbar an mehreren Behandlungsstationen gehalten werden kann, so dass eine Weitergabe der jeweiligen Halte- und Zentriereinrichtung (1) zusammen mit dem daran vorgesehenen Behälter (2) von einem Transportelement zum nächsten Transportelement ermöglicht wird, **dadurch gekennzeichnet, dass** die Halte- und Zentriereinrichtung zwei einander gegenüberliegend angeordnete Halteabschnitte (4, 4') aufweist, mittels denen jeweils ein zu behandelnder Behälter (2) fixierbar ist.

2. Halte- und Zentriereinrichtung nach Anspruch 1, **dadurch gekennzeichnet, dass** der Fixierabschnitt (3) zwischen den beiden gegenüberliegenden Halteabschnitten (4, 4') angeordnet ist.

3. Halte- und Zentriereinrichtung nach Anspruch 1 oder 2, **dadurch gekennzeichnet, dass** die Halteabschnitte (4, 4') zur Halterung eines Paares von zu behandelnden Behältern (2) derart ausgebildet sind, dass die Behältermündungen der Behälter des Behälterpaares einander zugewandt sind.

4. Halte- und Zentriereinrichtung nach einem der vorhergehenden Ansprüche, **dadurch gekennzeichnet, dass** die Halteabschnitte (4, 4') greiferartig ausgebildet sind.

5. Halte- und Zentriereinrichtung nach einem der vorhergehenden Ansprüche 1 bis 3, **dadurch gekennzeichnet, dass** die Halteabschnitte (4, 4') zumindest abschnittsweise in den Innenraum des Behälters (2) im Mündungsbereich (2.1) einschiebbar ausgebildet sind.

6. Halte- und Zentriereinrichtung nach einem der vorhergehenden Ansprüche, **dadurch gekennzeichnet, dass** die Halteabschnitte (4, 4') eine Klemmeinrichtung (5) zur klemmenden Halterung des Behälters (2) im Mündungsbereich (2.1) aufweisen.

7. Halte- und Zentriereinrichtung nach Ansprüchen 5 und 6, **dadurch gekennzeichnet, dass** die Halteabschnitte (4, 4') derart ausgebildet sind, dass nach einem abschnittsweisen Einschieben des Halteabschnitts (4, 4') in den Mündungsbereich (2.1) des Behälters (2) eine Fixierung des Behälters (2) durch radial nach außen bewegte, einen innenumfangsseitigen Druck auf die Behälterwandung bewirkende Klemmmittel (5.1) bewirkt wird.

8. Halte- und Zentriereinrichtung nach Anspruch 6 oder 7, **dadurch gekennzeichnet, dass** die Klemmeinrichtung (5) federbelastet oder durch ein Fluid, insbesondere pneumatisch betrieben ist.

9. Halte- und Zentriereinrichtung nach einem der vorhergehenden Ansprüche, **dadurch gekennzeichnet, dass** die Halteabschnitte (4, 4') drehbar gegenüber dem Fixierabschnitt (3) gehalten sind.

10. Halte- und Zentriereinrichtung nach Anspruch 9, **dadurch gekennzeichnet, dass** die Drehachsen der Halteabschnitte (4, 4') in einer gemeinsamen Drehachse (DA) zusammenfallen.

11. Halte- und Zentriereinrichtung nach einem der Anspruch 9 oder 10, **dadurch gekennzeichnet, dass** die beiden Halteabschnitte (4, 4') gemeinsam oder unabhängig voneinander drehbar angetrieben sind.

12. Halte- und Zentriereinrichtung nach einem der Ansprüche 9 bis 11, **dadurch gekennzeichnet, dass** die Halteabschnitte (4, 4') durch einen oder mehrere elektromagnetische Direktantriebe angetrieben sind, wobei ein mit dem jeweiligen Halteabschnitt (4, 4') gekoppelter Rotorabschnitt (6, 6') den Rotor des elektromagnetischen Direktantriebs bildet.

13. Halte- und Zentriereinrichtung nach einem der vorhergehenden Ansprüche, **dadurch gekennzeichnet, dass** Mittel zur Beaufschlagung des Innenraums des zu behandelnden Behälters (2) mit einem unter Druck stehenden Fluid vorgesehen sind.

14. Vorrichtung zum Behandeln von Behältern (2) mit einer Behältertransportstrecke, auf der die Behälter (2) zum Behandeln in einer Transportrichtung von einem Behältereinlauf (11) an einen Behälterauslauf (12) bewegt werden, wobei die Behältertransportstrecke von wenigstens einem um eine vertikale Maschinenachse umlaufend antreibbaren Transport- und Behandlungselement mit mehreren Behandlungsstationen gebildet ist, mit Halte-und Zentriereinrichtungen (1) nach einem der vorhergehenden Ansprüche zum Halten, Zentrieren, Ausrichten und/oder Bewegen der Behälter (2) an den Behandlungsstationen während der Behandlung, wobei die Halte- und Zentriereinrichtungen (1) mittels ihrer Fixierabschnitte (3) lösbar an den Behandlungsstationen gehalten werden können und eine Weitergabe der jeweiligen Halte- und Zentriereinrichtung (1) zusammen mit den daran vorgesehenen Behältern (2) von einem Transport- und Behandlungselement zum nächsten Transport- und Behandlungselement ermöglicht wird.

15. Vorrichtung nach Anspruch 14, **dadurch gekennzeichnet, dass** eine Zuführeinrichtung (13) für die zu behandelnden Behälter (2) vorgesehen ist, die eine Schwenkeinrichtung (14) zum Schwenken eines Teils der Behälter (2) um eine senkrecht zu deren Behälterhochachse verlaufende Achse aufweist, wobei die Zuführeinrichtung (13) derart ausgebildet ist, dass jeweils Behälterpaare mit einander zugewandten Mündungsbereichen den Halte- und Zentriereinrichtungen (1) zugeführt werden.

16. Verfahren zum Behandeln von Behältern, bei dem die zu behandelnden Behälter (2) auf einer Behältertransportstrecke von einem Behältereinlauf (11) an einen Behälterauslauf (12) bewegt werden, wobei die Behältertransportstrecke von wenigstens einem um eine vertikale Maschinenachse umlaufend antreibbaren Transport- und Behandlungselement mit mehreren Behandlungsstationen gebildet ist, mit Halte- und Zentriereinrichtungen (1) zum Halten, Zentrieren, Ausrichten und/oder Bewegen der Packmittel an den Behandlungsstationen während der Behandlung, **dadurch gekennzeichnet, dass** jede der Halte- und Zentriereinrichtungen nach einem der Ansprüche 1 bis 13 ausgebildet ist, und dass durch die Halte- und Zentriereinrichtungen (1) jeweils zwei zu behandelnde Behälter (2) einander gegenüberliegend gehalten werden, wobei die Halte- und Zentriereinrichtungen mittels ihrer Fixierabschnitte (3) lösbar an den Behandlungsstationen gehalten werden, und dass eine Weitergabe der jeweiligen Halte- und Zentriereinrichtung zusammen mit den daran vorgesehenen Behältern (2) von einem Transport- und Behandlungselement zum nächsten Transport- und Behandlungselement erfolgt.

## Claims

1. Holding and centring device for containers, comprising a fixing section (3), by means of which the holding and centring device can be fixed at a treatment station provided at a transport element of a container treatment machine, and at least one holding section (4, 4') which is configured so as to receive and hold a container (2) which is to be treated, wherein the holding and centring device (1) can be held in a detachable manner at a plurality of treatment stations (3), such that the onwards movement is made possible of the respective holding and centring device (1) together with the container (2) provided therein, from one transport element to the next transport element, **characterised in that** the holding and centring device comprises two holding sections (4, 4') arranged opposite one another, by means of which a container (2) which is to be treated can be fixed.

2. Holding and centring device according to claim 1, **characterised in that** the fixing section (3) is arranged between the two opposing holding sections (4, 4').

3. Holding and centring device according to claim 1 or 2, **characterised in that** the holding sections (4, 4') for holding a pair of containers (2) which are to be treated are configured in such a way that the container mouths of the containers of the container pair are facing towards one another.

4. Holding and centring device according to any one of the preceding claims, **characterised in that** the holding sections (4, 4') are configured in the form of grippers.

5. Holding and centring device according to any one of the preceding claims 1 to 3, **characterised in that** the holding sections (4, 4') are configured such as to be inserted at least by sections into the interior of the container (2) in the mouth region (2.1).

6. Holding and centring device according to any one of the preceding claims, **characterised in that** the holding sections (4, 4') comprise a clamping device (5) for the clamping holding of the container (2) in the mouth region (2.1).

7. Holding and centring device according to claims 5 and 6, **characterised in that** the holding sections (4, 4') are configured in such a way that, after an insertion section by section of the holding section (4, 4') into the mouth region (2.1) of the container (2), fixing of the container (2) is put into effect by clamping means (5.1), moved radially outwards and causing a pressure on an inner circumferential side onto the container wall.

8. Holding and centring device according to claims 6 or 7, **characterised in that** the clamping device (5) is spring-loaded or is operated by a fluid, in particular pneumatically.

9. Holding and centring device according to any one of the preceding claims, **characterised in that** the holding sections (4, 4') are held such as to be rotatable in relation to the fixing section (3).

10. Holding and centring device according to claim 9, **characterised in that** the axes of rotation of the holding sections (4, 4.') coincide in a common axis of rotation (DA).

11. Holding and centring device according to any one of claims 9 or 10, **characterised in that** the two holding sections (4, 4') are rotatably driven in common or independently of one another.

12. Holding and centring device according to any one of the preceding claims 9 to 11, **characterised in that** the holding sections (4, 4') are driven by one or more electromagnetic direct drives, wherein a rotor section (6, 6') coupled to the respective holding section (4, 4') forms the rotor of the electromagnetic direct drive.

13. Holding and centring device according to any one of the preceding claims, **characterised in that** means are provided for imposing on the interior of the container (2) which is to be treated a fluid which is under pressure.

14. Device for the treatment of containers (2) with a container transport section on which the containers (2) to be treated are moved in a transport direction from a container inlet (11) to a container outlet (12), wherein the container transport section is formed from at least one transport and treatment element, driven such as to circulate about a vertical machine axis, with a plurality of treatment stations, with holding and centring devices (1) according to the preceding claims, for holding, centring, aligning, and/or moving the containers (2) at the treatment stations during the treatment, wherein the holding and centring devices (1) can be held by means of their fixing sections (3) in a detachable manner to the treatment stations, and the onward conveying is made possible of the respective holding and centring device (1), together with the containers (2) provided in it, from one transport and treatment element to the next transport and treatment element.

15. Device according to claim 14, **characterised in that** a delivery device (13) is provided for the containers (2) which are to be treated, which comprises a pivoting device (14) for pivoting a part of the containers (2) about an axis running perpendicular to the container vertical axis, wherein the delivery device (13) is configured in such a way that in each case container pairs with mouth regions facing one another are delivered to the holding and centring devices (1).

16. Method for treating containers, with which the containers (2) which are to be treated are moved on a container transport section from a container inlet (11) to a container outlet (12), wherein the container transport section is formed from at least one transport and treatment element, which can be driven such as to rotate about a vertical machine axis, with a plurality of treatment stations, with holding and centring devices (1) for holding, centring, aligning and/or moving the packaging means to the treatment stations during the treatment, **characterised in that** each of the holding and centring devices is configured in accordance with any one of claims 1 to 13, and that in each case two containers (2) to be treated are held by the holding and centring devices (1) opposite one another, wherein the holding and centring devices are held by means of their fixing sections (3) in a detachable manner at the treatment stations, and that onward conveying of the respective holding and centring device, together with the containers (2) provided in them, to the next transport and treatment element is carried out by a transport and treatment element.

## Revendications

1. Système de maintien et de centrage pour des contenants comprenant une section de fixation (3), au moyen de laquelle le système de maintien et de centrage peut être fixé au niveau d'un poste de traitement prévu au niveau d'un élément de transport d'une machine de traitement de contenants et au moins une section de maintien (4, 4'), qui est réalisée pour recevoir et maintenir un contenant (2) à traiter, dans lequel le système de maintien et de centrage (1) peut être maintenu au moyen de la section de fixation (3) de manière amovible au niveau de plusieurs postes de traitement de sorte qu'un transfert du système de maintien et de centrage (1) respectif conjointement avec le contenant (2) prévu au niveau de celui-ci depuis un élément de transport vers le prochain élément de transport est rendu possible, **caractérisé en ce que**
le système de maintien et de centrage présente deux sections de maintien (4, 4') disposées de manière à se faire face l'une l'autre, au moyen desquelles respectivement un contenant (2) à traiter peut être fixé.

2. Système de maintien et de centrage selon la revendication 1, **caractérisé en ce que** la section de fixation (3) est disposée entre les deux sections de maintien (4, 4') se faisant face.

3. Système de maintien et de centrage selon la revendication 1 ou 2, **caractérisé en ce que** les sections de maintien (4, 4') sont réalisées aux fins du maintien d'une paire de contenants (2) à traiter de telle manière que les embouchures de contenant des contenants de la paire de contenants sont tournées les unes vers les autres.

4. Système de maintien et de centrage selon l'une quelconque des revendications précédentes, **caractérisé en ce que** les sections de maintien (4, 4') sont réalisées à la manière d'un grappin.

5. Système de maintien et de centrage selon l'une quelconque des revendications 1 à 3, **caractérisé en ce que** les sections de maintien (4, 4') sont réalisées au moins par endroits de manière à pouvoir être insérées dans l'espace intérieur du contenant (2) dans la zone d'embouchure (2.1).

6. Système de maintien et de centrage selon l'une quelconque des revendications précédentes, **caractérisé en ce que** les sections de maintien (4, 4') présentent un système de serrage (5) servant à maintenir par serrage le contenant (2) dans la zone d'embouchure (2.1).

7. Système de maintien et de centrage selon les revendications 5 et 6, **caractérisé en ce que** les sections de maintien (4, 4') sont réalisées de telle manière qu'après une insertion par endroits de la section de maintien (4, 4') dans la zone d'embouchure (2.1) du contenant (2), une fixation du contenant (2) est provoquée par le biais de moyens de serrage (5.1) déplacés radialement vers l'extérieur, provoquant une pression côté périphérie intérieure sur la paroi de contenant.

8. Système de maintien et de centrage selon la revendication 6 ou 7, **caractérisé en ce que** le système de serrage (5) est contraint par ressort ou fonctionne par le biais d'un fluide, en particulier de manière pneumatique.

9. Système de maintien et de centrage selon l'une quelconque des revendications précédentes, **caractérisé en ce que** les sections de maintien (4, 4') sont maintenues de manière à pouvoir tourner par rapport à la section de fixation (3).

10. Système de maintien et de centrage selon la revendication 9, **caractérisé en ce que** les axes de rotation des sections de maintien (4, 4') coïncident avec un axe de rotation (DA) commun.

11. Système de maintien et de centrage selon l'une quelconque des revendications 9 ou 10, **caractérisé en ce que** les deux sections de maintien (4, 4') sont entraînées de manière à pouvoir tourner conjointement ou indépendamment l'une de l'autre.

12. Système de maintien et de centrage selon l'une quelconque des revendications 9 à 11, **caractérisé en ce que** les sections de maintien (4, 4') sont entraînées par le biais d'un ou plusieurs entraînements directs électromagnétiques, dans lequel une section de rotor (6, 6') couplée à la section de maintien (4, 4') respective forme le rotor de l'entraînement direct électromagnétique.

13. Système de maintien et de centrage selon l'une quelconque des revendications précédentes, **caractérisé en ce que** sont prévus des moyens servant à soumettre l'espace intérieur du contenant (2) à traiter à l'action d'un fluide sous pression.

14. Dispositif servant à traiter des contenants (2) avec une ligne de transport de contenants, sur laquelle les contenants (2) à traiter sont déplacés dans une direction de transport depuis une entrée de contenants (11) vers une sortie de contenants (12), dans lequel la ligne de transport de contenants est formée par au moins un élément de transport et de traitement pouvant être entraîné de manière rotative autour d'un axe de machine vertical avec plusieurs postes de traitement, avec des systèmes de maintien et de centrage (1) selon l'une quelconque des revendications précédentes servant à maintenir, centrer, orienter et/ou déplacer les contenants (2) au niveau des postes de traitement pendant le traitement,
dans lequel les systèmes de maintien et de centrage (1) peuvent être maintenus au moyen de leurs sections de fixation (3) de manière amovible au niveau des postes de traitement et un transfert du système de maintien et de centrage (1) respectif conjointement avec les contenants (2) prévus au niveau de celui-ci depuis un élément de transport et de traitement vers le prochain élément de transport et de traitement est rendu possible.

15. Dispositif selon la revendication 14, **caractérisé en ce qu'**est prévu un système d'amenée (13) pour les contenants (2) à traiter, qui présente un système de pivotement (14) servant à faire pivoter une partie des contenants (2) autour d'un axe s'étendant de manière perpendiculaire par rapport à leur axe vertical de contenant, dans lequel le système d'amenée (13) est réalisé de telle manière que respectivement des paires de contenants avec des zones d'embouchure tournées les unes vers les autres sont amenées aux systèmes de maintien et de centrage (1).

16. Procédé servant à traiter des contenants, où les contenants (2) à traiter sont déplacés sur une ligne de transport de contenants depuis une entrée de contenants (11) vers une sortie de contenants (12), dans lequel la ligne de transport de contenants est formée par au moins un élément de transport et de traitement pouvant être entraîné de manière rotative autour d'un axe de machine vertical avec plusieurs postes de traitement, avec des systèmes de maintien et de centrage (1) servant à maintenir, centrer, orienter et/ou déplacer les moyens d'emballage au niveau des postes de traitement pendant le traitement, **caractérisé en ce que** chacun des systèmes de maintien et de centrage est réalisé selon l'une quelconque des revendications 1 à 13, et que respectivement deux contenants (2) à traiter sont maintenus de manière à se faire face l'un l'autre par le biais des systèmes de maintien et de centrage (1), dans lequel les systèmes de maintien et de centrage sont maintenus au moyen de leurs sections de fixation (3) de manière amovible au niveau des postes de traitement, et qu'un transfert du système de maintien et de centrage respectif conjointement avec les contenants (2) prévus au niveau de celui-ci depuis un élément de transport et de traitement vers le prochain élément de transport et de traitement est effectué.
